Europäisches Patentamt

European Patent Office

Office européen des brevets

(11) Numéro de publication: **0 318 362 B1**

## FASCICULE DE BREVET EUROPEEN

(45) Date de publication de fascicule du brevet: **16.09.92** (51) Int. Cl.5: **C01B 35/04**

(21) Numéro de dépôt: **88402895.2**

(22) Date de dépôt: **18.11.88**

(54) **Procédé de préparation de borures de terres rares.**

(30) Priorité: **26.11.87 FR 8716396**

(43) Date de publication de la demande:
**31.05.89 Bulletin 89/22**

(45) Mention de la délivrance du brevet:
**16.09.92 Bulletin 92/38**

(84) Etats contractants désignés:
**AT BE CH DE ES FR GB GR IT LI LU NL SE**

(56) Documents cités:
**DE-C- 157 615**
**NL-A- 6 804 216**

**CHEMICAL ABSTRACTS, vol. 93, no. 22, décembre 1980, page 141, résumé no. 206964w, Columbus, Ohio, US; A.I. KARASEV et al.: "Study of conditions for the production of technical-grade samarium, europium, and gadolinium hexaborides under pilot-plant conditions", & TUGOPLAVKIE SOEDIN. RED-KOZEM. MET., [MATER. VSES. SEMIN.], 3rd 1977 (Pub. 1979), 32-4**

**"Progress in Boron Chemistry", édité par H. STEINBERG et al., vol. 2, no. 3, 1970, page 193, MacMillan Co., New York, US**

(73) Titulaire: **RHONE-POULENC CHIMIE**
**25, quai Paul Doumer**
**F-92408 Courbevoie Cédex(FR)**

(72) Inventeur: **Iltis, Alain**
**13, rue des Noyers**
**F-93300 Aubervilliers(FR)**
Inventeur: **Maestro, Patrick**
**8, rue des Mousserons**
**F-95800 Cergy-Saint-Christophe(FR)**

(74) Mandataire: **Dutruc-Rosset, Marie-Claude et al**
**RHONE-POULENC INTERSERVICES Service**
**Brevets Chimie 25, Ouai Paul Doumer**
**F-92408 Courbevoie Cédex(FR)**

## Description

La présente invention a trait à un procédé de préparation de borures de terres rares.

L'expression "terres rares" utilisée conformément à l'invention comprend les éléments de terres rares appelés lanthanides ayant des numéros atomiques de 57 à 71 inclus et l'yttrium de numéro atomique égal à 39.

Les borures de terres rares sont des produits connus comme ayant des propriétés électriques intéressantes. En particulier, l'hexaborure de lanthane possède d'excellentes propriétés d'émission thermoionique et est utilisé comme cathode émissive dans les dispositifs de haute énergie.

Actuellement, le développement industriel des borures de terres rares est limité en raison de la difficulté d'obtention d'un produit présentant une pureté satisfaisante selon un procédé extrapolable à l'échelle industrielle.

Il est connu de préparer le borure de lanthane par réduction du sesquioxyde de lanthane à l'aide du carbure de bore ou de bore élémentaire, sous pression réduite [cf. G. A. Meerson et al - Izv. Akad. Nauk. SSSR Neorg. Mater 3 n° 5 p. 802-806 (1967)]. Toutefois, les réactions étant conduites à des températures supérieures à 1500°C, ceci impose non seulement de faire appel à un creuset en graphite, mais de disposer d'un four ayant un revêtement en graphite.

Il est aussi connu de NL-A-6 804 216 par réaction de bore élémentaire avec des halogénures de terre rare, plus particulièrement des Fluorures, à 1500°C.

On a également proposé selon US-A 3 902 973 de préparer les borures de terres rares, par électrolyse d'une source de terre rare, en milieu sel fondu contenant une cryolite et un borate de métal alcalin. Un tel procédé de préparation est relativement complexe en raison d'une température d'électrolyse comprise entre 950°C et 1050°C et il se pose le problème classique de la récupération du borure de terre rare à la cathode qui, par ailleurs, présente une pollution due à la cryolithe.

On rencontre dans le procédé décrit dans US-A 4 260 525, le même problème de séparation du borure de terre rare obtenu : ledit procédé consiste à mélanger le composé carbonate, nitrate ou oxyde de terre rare, avec du bore, en présence d'aluminium pour dissoudre le bore à une température comprise entre 1200°C et 1600°C; à chauffer le milieu réactionnel dans cette gamme de température, à le refroidir, puis à séparer le borure de terre rare, de l'oxyde d'aluminium formé.

Pour pallier les inconvénients de séparation et de purification des produits obtenus selon les procédés décrits dans l'état de la technique, la demanderesse propose un procédé de préparation d'un borure de terre rare dont la caractéristique est d'obtenir directement un borure de terre rare, en chauffant un chlorure de terre rare et du bore élémentaire.

Conformément à l'invention, on effectue la préparation du borure de terre rare suivant la réaction (1) :

$$TrCl_3 + (n + 1)B \rightarrow TRB_n + BCl_3 \qquad (1)$$

Dans ladite réaction, n représente le nombre d'atomes de bore par atome de terre rare et est, généralement, égal à 4 ou 6.

Le procédé de l'invention permet d'accéder d'une manière directe, au borure de terre rare recherché car le seul produit secondaire formé est le chlorure de bore qui est volatil, dans les conditions de la réaction.

Un autre avantage du procédé de l'invention est qu'il peut être mis en oeuvre dans un appareillage classique, à savoir un four avec des briques réfractaires en alumine ou alumino-silicates car la température réactionnelle est relativement basse : elle peut être choisi inférieure à 1500°C et, de préférence, aux environs de 1200°C.

Conformément au procédé de l'invention, on fait appel à un chlorure d'une terre rare qu'il soit sous forme anhydre ou hydratée ou à un mélange d'au moins deux chlorures de terres rares.

Il est souhaitable que le chlorure mis en oeuvre soit d'une grande pureté en particulier exempt d'impuretés oxygénées telles qu'un oxyde résiduaire.

On met en oeuvre, de préférence, un chlorure de terre rare éventuellement hydraté ayant une pureté supérieure à 95 %.

Toutefois, la présence d'oxychlorure et d'eau n'est pas gênante et l'on peut tolérer une quantité totale pouvant atteindre 20 % en poids.

D'une manière préférentielle, on soumet le chlorure de terre rare à une opération de séchage qui peut être effectuée à une température comprise entre 20 et 200 °C, de préférence aux environs de 100°C. Le séchage peut être réalisé à l'air ou, de préférence, sous pression réduite comprise par exemple entre 1 mm de mercure (= 133,322 Pa) et 100 mm de mercure (13 322,2 Pa).

La durée de séchage peut varier entre 2 et 24 heures.

En ce qui concerne le bore, on peut avoir recours au bore élémentaire, sous forme amorphe ou cristallisé.

On fait appel, de préférence, à un bore exempt d'impuretés oxygénées. Pour ce qui est des impuretés métalliques, elles sont moins gênantes et l'on peut mettre en oeuvre un bore ayant une pureté de 85 % et plus.

Les quantités de chlorure de terre rare et de bore engagées sont telles que le rapport molaire entre le bore et le chlorure de terre rare est, de préférence, au plus égal à la quantité stoéchiométrique réactionnelle et, encore plus préférentiellement, en léger défaut, pouvant atteindre de 10 à 20 % de la quantité stoechiométrique réactionnelle.

La première étape du procédé de l'invention consiste à effectuer le mélange intime du chlorure de terre rare et du bore, par voie sèche ou par voie humide.

On soumet ensuite le mélange de poudres obtenu à un traitement thermique. La réaction est effectuée à une température comprise entre 1200°C et 1500°C. D'une manière préférentielle, on choisit une température comprise entre 1250°C et 1300°C.

On effectue la réaction à la pression atmosphérique, mais sous atmosphère de gaz réducteurs et/ou de gaz inertes. C'est ainsi que l'on peut faire appel à l'hydrogène ou à l'argon, seuls ou en mélange.

On maintient l'atmosphère des gaz précités, tout au cours de la réaction.

La durée de la réaction est fonction de la capacité de l'appareillage et de son aptitude à monter rapidement en température. Généralement, une fois la température souhaitée atteinte, on la maintient pendant une durée variable de 1 à 4 heures et, de préférence comprise entre 1 heure et 2 heures.

Au cours de la réaction, il y a formation d'un borure de terre rare et dégagement gazeux qui peut être le chlorure de bore éventuellement accompagné d'oxychlorure de bore qui peuvent être piégés par exemple, par barbotage dans l'eau.

On procède ensuite au refroidissement de la masse réactionnelle jusqu'à température ambiante (15 à 25°C). Il est réalisé sous atmosphère réductrice et/ou inerte tant que la température réactionnelle n'est pas inférieure à 600°C.

On récupère directement un borure de terre rare.

Il peut être souhaitable d'effectuer un ou plusieurs lavages à l'eau, de préférence de un à trois, des chlorures qui peuvent être présents, à titre d'impuretés. A cet effet, on met le produit en suspension dans l'eau, puis l'on effectue sa séparation selon les techniques classiques de séparation solide/liquide, en particulier filtration, décantation, essorage.

Conformément au procédé de l'invention, on obtient un borure de terre rare. Il s'agit le plus souvent d'un hexaborure de terre rare ou d'un tétraborure de terre rare selon les quantités stoechiométriques mises en oeuvre. L'hexaborure de terre rare a une maille élémentaire cubique du type CsCl. Quant au tétraborure de terre rare, il cristallise dans le système quadratique.

Le procédé de l'invention peut être mis en oeuvre dans un appareillage classique.

Le mélange du chlorure de terre rare et du bore peut être fait dans un mélangeur à poudres de type connu : mélangeurs à chute libre du type tambour, mélangeurs verticaux ou horizontaux à vis hélicoïdale, mélangeurs horizontaux type Lödige, etc...

Le mélange obtenu est placé dans une nacelle ou un creuset qui peut être en alumine, zircone, carbone vitreux ou, de préférence, en graphite, puis l'ensemble est introduit dans un four à chambre, tunnel, à moufles ou rotatif présentant un revêtement réfractaire classique (alumine ou alumino-silicates). Ce four est équipé d'un dispositif permettant de réguler la température au cours du traitement thermique. Il doit être étanche et permettre la circulation des gaz (hydrogène, inertes). Il y a lieu de prévoir un dispositif destiné à la récupération des dégagements gazeux, par exemple, une tour de lavage.

On donne, ci-après, des exemples de réalisation de l'invention présentés à titre illustratif, sans aucun caractère limitatif.

Exemple 1

Préparation d'hexaborure de cérium

On commence par sécher le chlorure de cérium $CeCl_3,7H_2O$ (pureté 99,5 %) pendant 24 heures, à une température de 100°C et sous pression réduite de 1000 Pa.

On fait le mélange de 27,35 g dudit produit avec 6,48 g de bore cristallisé commercialisé par la Société PROLABO, ayant une pureté de 98 % et présentant une taille de particules variant de 25 à 63 $\mu$m.

On introduit ensuite ce mélange dans un creuset en graphite que l'on place dans un four tubulaire à revêtement réfractaire en alumine dans lequel on établit un balayage d'argon contenant 10 % en volume d'hydrogène.

On monte la température jusqu'à 1300°C et on la maintient pendant deux heures.

On laisse ensuite refroidir la masse réactionnelle à l'inertie du four, le balayage gazeux étant maintenu jusqu'à ce que la température devienne inférieure à 600°C.

On obtient 19,00 g d'un produit bleu-violet.

On effectue un lavage du produit obtenu par mise en suspension dans l'eau afin d'eliminer toute trace de chlorure.

Le produit obtenu est l'hexaborure de cérium ayant un diagramme de diffraction RX conforme à la fiche ASTM 11670.

On obtient une poudre ayant un diamètre moyen de particules de 8 $\mu$m et de 4 $\mu$m après

délitage des agglomérats aux ultra-sons pendant deux minutes.

Example 2

Préparation d'hexaborure de lanthane

On part d'un chlorure de lanthane préparé à partir d'oxyde de lanthane à 99,9 % et d'acide chlorhydrique.

On sèche le chlorure de lanthane obtenu, pendant 24 heures, à une température de 100°C et sous pression réduite de 1000 Pa.

On fait le mélange de 15 g dudit produit avec 4,62 g de bore cristallisé.

On introduit ensuite ce mélange dans un creuset en graphite que l'on place dans le four tubulaire dans lequel on établit un balayage d'argon et d'hydrogène.

On monte la température jusqu'à 1250°C et on la maintient pendant deux heures.

On laisse ensuite refroidir la masse réactionnelle à l'inertie du four, le balayage gazeux étant maintenu jusqu'à ce que la température devienne inférieure à 600°C.

On effectue un lavage à l'eau du produit obtenu.

Le produit obtenu, qui est de couleur bleue, est l'hexaborure de lanthane ayant un diagramme de diffraction RX conforme à la fiche ASTM 34427.

Exemple 3

Préparation d'hexaborure de praséodyme

On prépare du chlorure de praséodyme déshydraté selon le mode opératoire de l'exemple 1.

On fait le mélange de 11 g dudit produit avec 3,059 g de bore cristallisé.

On introduit ensuite ce mélange dans un creuset en graphite que l'on place dans le four tubulaire dans lequel on établit un balayage d'argon et d'hydrogène.

On monte la température jusqu'à 1250°C et on la maintient pendant deux heures.

On laisse ensuite refroidir la masse réactionnelle à l'inertie du four, le balayage gazeux étant maintenu jusqu'à ce que la température devienne inférieure à 600°C.

On effectue un lavage à l'eau du produit obtenu.

Le produit obtenu, qui est de couleur bleue, est l'hexaborure de praséodyme ayant un diagramme de diffraction RX conforme à la fiche ASTM 251455.

Exemple 4

Préparation d'hexaborure de cérium

On sèche le chlorure de cérium $CeCl_3,7H_2O$ (pureté 99,5 %) pendant 24 heures, à une température de 100°C et sous pression réduite de 1000 Pa.

On fait le mélange de 8 g dudit produit avec 2,6039 g de bore technique amorphe contenant 85 % de bore et 12 % de magnésium et présentant une taille de particules de 1,2 $\mu$m.

On introduit ensuite ce mélange dans une nacelle en alumine que l'on place dans un four tubulaire dans lequel on établit un balayage d'argon et d'hydrogène.

On monte la température jusqu'à 1250°C et on la maintient pendant deux heures.

On laisse ensuite refroidir la masse réactionnelle à l'inertie du four, le balayage gazeux étant maintenu jusqu'à ce que la température devienne inférieure à 600°C.

On effectue trois lavages successifs du produit obtenu, par mise en suspension dans l'eau afin d'éliminer toute trace de chlorure.

Le produit obtenu est l'hexaborure de cérium ayant un diagramme de diffraction RX conforme à la fiche ASTM 11670.

Il ne présente aucune impureté cristalline imputable à la présence de magnésium, dans le bore technique.

On obtient une poudre ayant des particules de 40 $\mu$m et de 30 $\mu$m après traitement de deux minutes aux ultra-sons.

**Revendications**

1. Procédé de préparation d'un borure d'une terre rare caractérisé par le fait qu'il consiste à chauffer un chlorure de terre rare et du bore élémentaire.

2. Procédé selon la revendication 1 caractérisé par le fait que le borure de terre rare est un hexaborure de terre rare.

3. Procédé selon l'une des revendications 1 et 2, caractérisé par le fait que le borure de terre rare est un borure de lanthanides ou d'yttrium.

4. Procédé selon l'une des revendications 1 à 3 caractérisé par le fait que le borure de terre rare est l'hexaborure de cérium, de lanthane ou de praséodyme.

5. Procédé selon l'une des revendications 1 à 4 caractérisé par le fait que l'on met en oeuvre un chlorure ou un mélange de chlorures de terres rares.

**6.** Procédé selon l'une des revendications 1 à 5 caractérisé par le fait que le chlorure de terre rare est soumis à un séchage entre 20°C et 200°C à l'air ou sous pression réduite.

**7.** Procédé selon l'une des revendications 1 à 6 caractérisé par le fait que le rapport molaire entre le bore et le chlorure de terre rare est au plus égal à la quantité stoechiométrique.

**8.** Procédé selon la revendication 7 caractérisé par le fait que ledit rapport est en léger défaut pouvant atteindre de 10 à 20 % de la quantité stoechiométrique réactionnelle.

**9.** Procédé selon l'une des revendications 1 à 8 caractérisé par le fait que la réaction est effectuée entre 1200°C et 1500°C.

**10.** Procédé selon la revendication 9 caractérisé par le fait que ladite température est comprise entre 1250°C et 1300°C.

**11.** Procédé selon l'une des revendications 1 à 10 caractérisé par le fait que l'on conduit la réaction sous atmosphère d'hydrogène et/ou de gaz inertes.

**12.** Procédé selon la revendication 1 caractérisé par le fait que l'on conduit la réaction sous atmosphère d'hydrogène et/ou d'argon.

**13.** Procédé selon l'une des revendicatons 1 à 12 caractérisé par le fait que la durée de la réaction varie de 1 à 4 heures.

**14.** Procédé selon la revendication 13 caractérisé par le fait que ladite durée est comprise entre 1 et 2 heures.

**15.** Procédé selon l'une des revendications 1 à 14 caractérisé par le fait que l'on récupère le borure de terre rare, après refroidissement jusqu'à température ambiante.

**16.** Procédé selon l'une des revendications 1 à 15 caractérisé par le fait que l'on soumet le produit obtenu à un ou plusieurs lavages à l'eau.

**Claims**

**1.** Process for the preparation of a rare earth boride, characterized in that it consists of heating a rare earth chloride and elementary boron.

**2.** Process according to claim 1, characterized in that the rare earth boride is a rare earth hexaboride.

**3.** Process according to one of the claims 1 and 2, characterized in that the rare earth boride is a boride of lanthanides or yttrium.

**4.** Process according to one of the claims 1 to 3, characterized in that the rare earth boride is cerium, lanthanum or praseodymium hexaboride.

**5.** Process according to one of the claims 1 to 4, characterized in that use is made of a chloride or a mixture of chlorides of rare earths.

**6.** Process according to one of the claims 1 to 5, characterized in that the rare earth chloride undergoes drying at between 20 and 200°C in air or under reduced pressure.

**7.** Process according to one of the claims 1 to 6, characterized in that the molar ratio between the boron and the rare earth chloride is at the most equal to the stoichiometric quantity.

**8.** Process according to claim 7, characterized in that the said ratio is in slight deficiency able to reach 10 to 20% of the reaction stoichiometric quantity.

**9.** Process according to one of the claims 1 to 8, characterized in that the reaction is performed at between 1200 and 1500°C.

**10.** Process according to claim 9, characterized in that the temperature is between 1250 and 1300°C.

**11.** Process according to one of the claims 1 to 10, characterized in that the reaction is performed under an atmosphere of hydrogen and/or inert gases.

**12.** Process according to claim 1, characterized in that the reaction is performed under an atmosphere of hydrogen and/or argon.

**13.** Process according to one of the claims 1 to 12, characterized in that the duration of the reaction is 1 to 4 hours.

**14.** Process according to claim 13, characterized in that said duration is between 1 and 2 hours.

**15.** Process according to one of the claims 1 to 14, characterized in that the rare earth boride is recovered after cooling to ambient termperature.

**16.** Process according to one of the claims 1 to 15, characterized in that the product obtained undergoes one or more washing operations with water.

**Patentansprüche**

1. Verfahren zur Herstellung eines SE-borids, dadurch gekennzeichnet, daß man ein SE-chlorid und elementares Bor miteinander erhitzt.

2. Verfahren nach Anspruch 1, dadurch gekennzeichnet, daß das SE-borid ein SE-hexaborid ist.

3. Verfahren nach einem der Ansprüche 1 und 2, dadurch gekennzeichnet, daß das SE-borid ein Lanthaniden-borid oder ein Yttriumborid ist.

4. Verfahren nach einem der Ansprüche 1 bis 3, dadurch gekennzeichnet, daß das SE-borid Cerhexaborid, Lanthanhexaborid oder Praseodymhexaborid ist.

5. Verfahren nach einem der Ansprüche 1 bis 4, dadurch gekennzeichnet, daß man ein SE-chlorid oder ein Gemisch von SE-chloriden einsetzt.

6. Verfahren nach einem der Ansprüche 1 bis 5, dadurch gekennzeichnet, daß das SE-chlorid bei 20 bis 200°C an der Luft oder unter vermindertem Druck getrocknet wird.

7. Verfahren nach einem der Ansprüche 1 bis 6, dadurch gekennzeichnet, daß das Molverhältnis zwischen SE-borid und SE-chlorid höchstens gleich der stöchiometrischen Menge ist.

8. Verfahren nach Anspruch 7, dadurch gekennzeichnet, daß das Verhältnis einem leichten Unterschuß, der bis zu 10 bis 20% der stöchiometrischen Menge der Reaktion ausmachen kann, entspricht.

9. Verfahren nach einem der Ansprüche 1 bis 8, dadurch gekennzeichnet, daß die Reaktion bei 1200 bis 1500°C durchgeführt wird.

10. Verfahren nach Anspruch 9, dadurch gekennzeichnet, daß die Reaktion bei 1250 bis 1300°C durchgeführt wird.

11. Verfahren nach einem der Ansprüche 1 bis 10, dadurch gekennzeichnet, daß man die Reaktion unter einer Wasserstoffatmosphäre und/oder Inertgasen durchführt.

12. Verfahren nach Anspruch 1, dadurch gekennzeichnet, daß man die Reaktion unter Wasserstoff- und/oder Argonatmosphäre durchführt.

13. Verfahren nach einem der Ansprüche 1 bis 12, dadurch gekennzeichnet, daß die Reaktionsdauer 1 bis 4 h beträgt.

14. Verfahren nach Anspruch 13, dadurch gekennzeichnet, daß die Reaktionsdauer 1 bis 2 h beträgt.

15. Verfahren nach einem der Ansprüche 1 bis 14, dadurch gekennzeichnet, daß man das SE-borid nach Abkühlen bis auf Raumtemperatur gewinnt bzw. isoliert.

16. Verfahren nach einem der Ansprüche 1 bis 15, dadurch gekennzeichnet, daß man das erhaltene Produkt einmal oder mehrere Male mit Wasser wäscht.